# FASCICULE DE BREVET EUROPEEN

(11) **EP 0 647 510 B1**
(45) Date de publication et mention de la délivrance du brevet: **16.04.1997**
(21) Numéro de dépôt: 94114413.1
(22) Date de dépôt: 14.09.1994
(51) Int. Cl.: B26D 7/26, B26F 1/40, B23D 35/00

(54) **Procédé pour l'échange des outils de découpage dans une presse à platines et dispositif pour sa mise en oeuvre**
Verfahren zum Austauschen von Stanzwerkzeugen in einer Plattenpresse sowie Vorrichtung zur Durchführung des Verfahrens
Method for tool exchanging in a stamping press and apparatus for carrying out the method

(30) Priorité: 22.09.1993 CH 2857/93
(43) Date de publication de la demande: 12.04.1995
(73) Titulaire: BOBST S.A., CH-1001 Lausanne (CH)
(72) Inventeur: Steiner, Jean-Pierre, CH-1023 Crissier (CH); Varidel, Charly, CH-1052 Le Mont (CH)
(74) Mandataire: Colomb, Claude

(56) Documents cités:
- WO-A-86/01444
- FR-A- 2 595 980
- GB-A- 1 118 125

## Description

La présente invention a pour objet un procédé pour l'échange des outils de découpage dans une presse à platines et un dispositif pour la mise en oeuvre du procédé, notamment pour l'échange de l'outil supérieur et de l'outil inférieur de la station de découpage de ladite presse à platines.

La station de découpage d'une presse à platines comprend généralement une paires de bras s'étendant perpendiculairement au bâti de la presse, du côté de l'utilisateur de celle-ci. Dans une forme d'exécution, ces bras peuvent pivoter autour d'un axe situé au voisinage de la face externe du bâti de façon à pouvoir être repliés contre celui-ci lorsqu'ils ne sont pas utilisés. Cette solution augmente l'espace disponible devant la machine et facilite les déplacements de l'opérateur le long de celle-ci.

Dans une autre forme d'exécution, par exemple dans le cas de machines travaillant des petits formats de feuilles, ces bras peuvent être non pivotants, s'étendant ainsi en permanence perpendiculairement à la face du bâti.

Chacun de ces bras comporte, sur sa face intérieure, deux glissières dans lesquelles les outils de découpage sont coulissés lors de leur extraction de la station de découpage. Chacun des bras comporte également un dispositif de pivotement, placé à l'extrémité opposée de sa liaison au bâti, destiné à permettre le pivotement, jusqu'à 180 degrés, des outils de découpage.

Un nouveau travail devant être réalisé par la presse à platines nécessite le remplacement des anciens outils par de nouveaux outils adaptés au nouveau travail.

Dans les dispositifs connus à ce jour (voir par exemple FR-A-2595980), le remplacement ou le changement des outils de découpage s'effectue déjà à l'aide d'un chariot auxiliaire comprenant deux longerons montés en opposition entre deux bâtis latéraux. Ces longerons comportent, sur leurs faces intérieure, deux coulisses dont une paire est destinée à recevoir un nouvel outil. Au moment du changement de travail, on amène le chariot en face de l'ouverture des bras de la station de découpage, après avoir retiré sur ceux-ci l'un des outils préalablement utilisé dans la presse à platines. Ensuite, on introduit cet outil dans la paire de coulisses laissée libre du chariot, on verrouille cet outil en position horizontale dans ses coulisses et l'on fait pivoter de 180 degrés, dans un plan horizontal, l'ensemble constitué par le nouvel outil, l'outil utilisé et les longerons de façon à ce que le nouvel outil viennent se positionner exactement en face des glissières des bras, on libère le nouvel outil de ses verrouillages et on peut alors l'insérer dans la station de découpage où il sera a nouveau verrouillé. Il faudra ensuite retirer le chariot de devant la machine puis le décharger de l'ancien outil de manière à pouvoir le charger avec le deuxième nouvel outil de découpage et recommencer l'opération.

Cette façon de faire présente, entre autres, l'inconvénient de devoir effectuer deux chargements et un déchargement d'outils sur le chariot ce qui prend un temps relativement long ayant une influence défavorable sur le rendement de production de la presse à platines qui doit être à l'arrêt pendant toute l'opération. De plus, de par la rotation dans le plan horizontal des outils et en cas de mauvais fonctionnement du verrouillage des outils sur le chariot, il peut se produire que l'un de ces outils, d'un poids pouvant aller parfois jusqu'à 50 kilos, tombe, risquant de ce fait de blesser l'opérateur. Il faut encore remarquer que cette solution est encombrante et nécessite une grande surface libre devant la presse à platines ce qui n'est pas compatible avec une utilisation optimale de la place disponible dans l'entourage de celle-ci.

Il convient donc, pour augmenter la production globale d'une presse à platines, tout en améliorant la sécurité et l'utilisation de l'installation, de réduire au maximum les temps d'arrêt dûs aux réglages et aux changements de travaux et de diminuer l'encombrement des dispositifs nécessaires à l'échange des différents outils de découpage de la presse à platines.

Le but de la présente invention consiste à supprimer les inconvénients précités. A cet effet, l'invention a pour objet un procédé conforme à ce qu'énonce la revendication 1 et un dispositif conforme à ce qu'énonce la revendication 2.

L'invention sera mieux comprise à l'étude de l'une de ses formes d'exécution illustrée à l'aide des dessins annexés dans lesquels :
- la figure 1 est une vue générale partielle en perspective d'une presse à découper,
- la figure 2 est une vue de profil d'un dispositif échangeur d'outils,
- la figure 3 est une vue en élévation du dispositif de la figure 2 et
- la figure 4 est un vue en coupe partielle selon IV - IV de la figure 3.

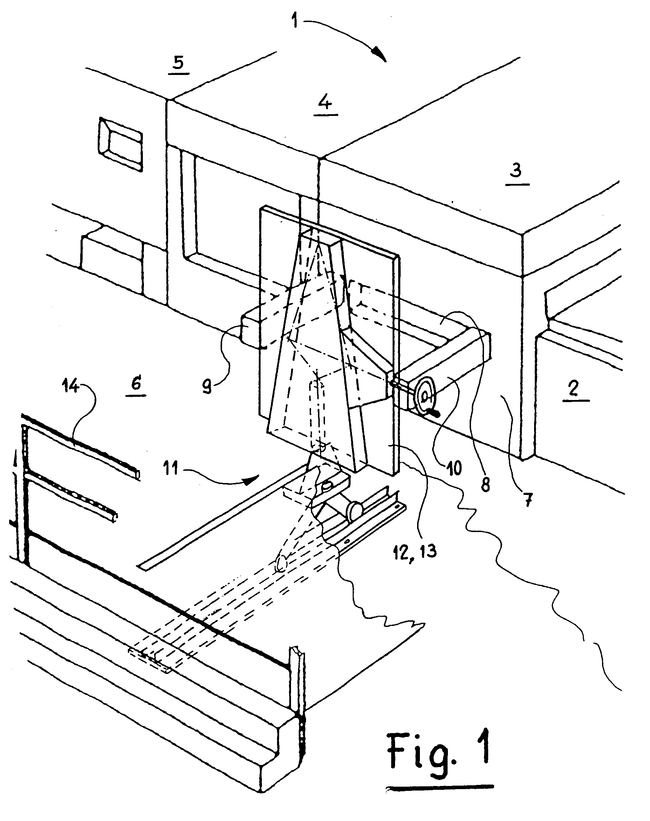

La figure 1 est une vue générale partielle, en perspective, d'une presse à découper 1 qui comprend généralement une station de marge 2, partiellement représentée, une station de découpage 3, une station d'éjection des déchets 4 et une station de réception 5. Pour pouvoir travailler de façon rationnel le autour de la presse à découper 1, on y adjoint un podium 6.

La station de découpage 3 comporte, dans sa face 7, une ouverture 8 destinée à laisser passer des outils de découpage 12, 13, lors de leur introduction ou de leur retrait de la station de découpage 3. De chaque côté de cette ouverture 8, sont agencés deux bras 9 et 10. Ces bras 9 et 10 sont destinés à supporter les outils de découpage 12, 13 lorsque on les introduit ou les retire de la station de découpage 3. Dans l'exécution représentée sur la figure 1, ces bras 9 et 10 sont fixés rigidement contre la face 7 de la station de découpage 3. Dans une autre version de la machine ces bras 9 et 10 sont montés de façon à pouvoir être pivotés autour d'un axe situé au voisinage de la face 7. En règle générale, ces bras comportent encore, sur chacune de leurs faces intérieures deux coulisses superposées dans lesquelles s'engagent les bords latéraux des outils de découpage 12, 13. L'extrémité des bras 9 et 10, éloignée de la face 7, comporte aussi un pivot autour duquel il est possible de faire tourner chacun des outils de découpage 12, 13 cela afin de réaliser sur ceux-ci des opérations de réglage ou de maintenance.

Les presses à découper du type représenté sur la figure 1 sont destinées à réaliser un grand nombre de travaux différents et cela nécessite l'échange assez fréquent des outils de découpage. Ces outils de découpage 12, 13, de forme plus ou moins rectangulaire, sont d'un maniement difficile en raison de leur format qui peut dépasser en surface l'ordre du mètre carré et même aller, pour certain format de machine, jusqu'à près de deux mètres carrés.

Pour rendre ce maniement plus aisé et diminuer les pertes de temps lors de l'échange des outils de découpage 12, 13, on utilise un chariot 11 pouvant se déplacer d'une position hors-service située au voisinage de la barrière 14 du podium 6 à une station de service située en face des bras 9 et 10.

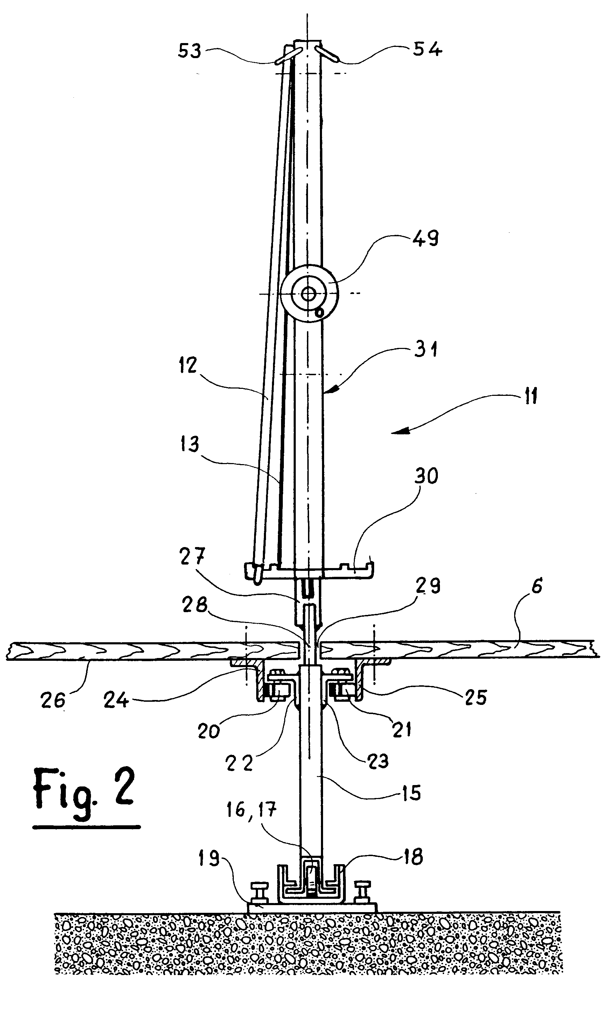

La figure 2 est une vue de profil d'un dispositif échangeur d'outils comprenant un chariot 11 comportant une embase 15 munie à sa partie inférieure de galets 16, 17 roulant dans un rail 18 disposé à même le sol à l'aide d'une semelle 19. La partie supérieure de l'embase 15 est équipée de deux galets 20 et 21 dont l'axe est fixé sur des cornières 22 et 23 vissées contre chacune des faces de l'embase 15. Les galets 20 et 21 roulent dans une coulisse de guidage constituée par deux fers équerre 24 et 25 fixés contre la face inférieure 26 du podium 6. L'extrémité supérieure de l'embase 15 comporte un axe d'appui 27 qui est relié par soudure à l'embase 15 à l'aide de la pièce de raccord 28 qui traverse l'épaisseur du podium 6 dans une rainure 29 aménagée dans celui-ci. La rainure 29 s'étend perpendiculairement à la face de la station de découpage 3 et est de préférence disposée dans l'axe médian de l'espace séparant les deux bras 9 et 10 (voir figure 1). L'axe d'appui 27 traverse la plaque de base 30 d'un cadre support 31 comportant également deux montants 32 et 33 disposés sensiblement verticalement sur la plaque de base 30 de façon à former un triangle isocèle. La plaque de base 30 est de plus équipée d'un palier coulissant 34 qui est traversé par l'axe d'appui 27, le palier coulissant 34 se déplaçant verticalement le long de l'axe d'appui 27 lors de la montée ou de la descente du cadre support 31. La plaque de base 30 comporte aussi des logements 35 et 36 limités par des protubérances 37 et 38, ces logements 35 et 36 étant disposés symétriquement de chaque côté de l'axe d'appui 27 dans la partie supérieure de la plaque de base 30.

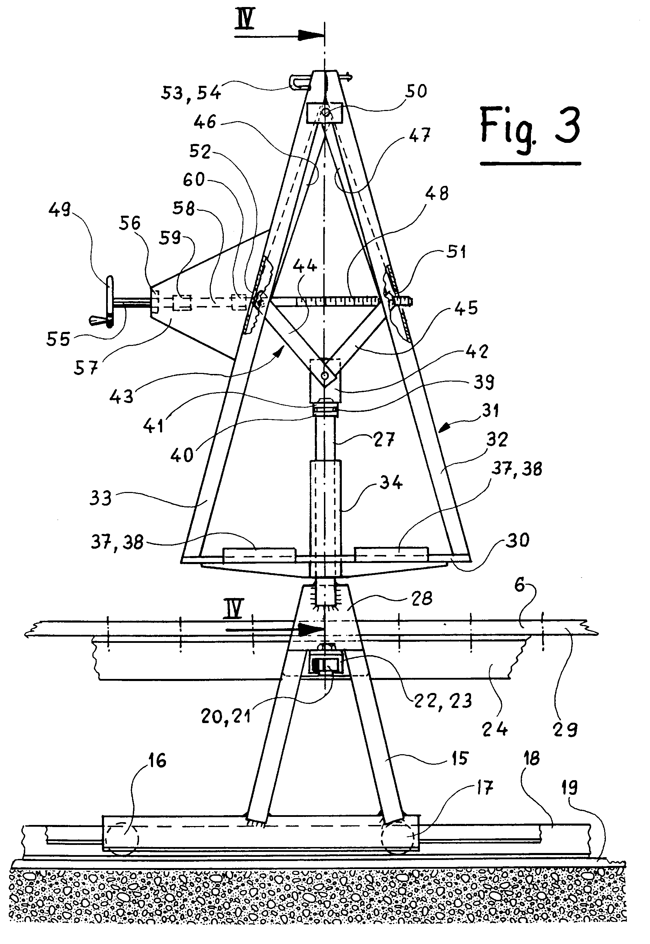

Si l'on se réfère maintenant à la figure 3, on peut voir que l'axe d'appui 27 comporte, à son extrémité supérieure une butée à billes 39 dont la bague inférieure 40 est rendue solidaire de l'axe d'appui 27 et dont la bague supérieure 41 est reliée au point de pivot inférieur 42 des moyens de levage 43 constitués par un dispositif à bras croisés comportant quatre biellettes 44, 45, 46 et 47 formant un losange asymétrique pouvant être déformé par l'action d'une vis transversale 48 équipée d'une manivelle 49. Le point de pivot supérieur 50 des moyens de levage 43 est relié au cadre support 31 à l'endroit de jonction des deux montants 32 et 33, c'est à dire au voisinage du sommet du triangle isocèle formé par la plaque de base 30 et par les deux montants 32 et 33 susmentionnés. Des fentes longitudinales 51 et 52 sont prévues dans chacun des montants 32 et 33 de façon à rendre possible le déplacement vertical de haut en bas et de bas en haut du cadre support lors de la mise en action des moyens de levage 43. L'axe de la vis transversale 48 est relié à la manivelle 49 par un premier axe 55, supporté dans un palier 56 aménagé dans un bras-support 57 fixé, par soudure, au montant 33, et par un second axe 58 muni, à ses extrémités de liaison avec le premier axe 55 et avec l'axe de la vis transversale 48, de deux joints rotatifs articulés 59 et 60 de manière à autoriser le déplacement vertical du cadre support 31. Le cadre support 31 est en outre muni, à sa partie supérieure de moyens de retenue des outils de découpage 12 et 13 constitués par des crochets pivotants 53 et 54 verrouillables dans deux positions.

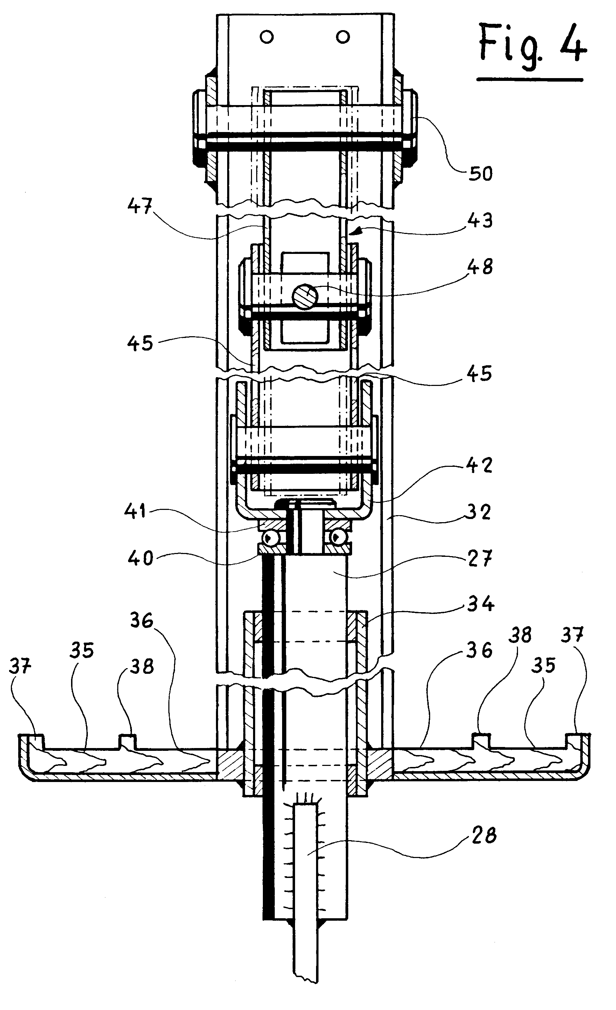

La figure 4 est une vue en coupe partielle selon IV - IV de la figure 3 montrant en détail la manière suivant laquelle on a réalisé la liaison entre l'axe d'appui 27 et les moyens de levage 43. Ainsi que l'on peut le voir, tout l'ensemble formé par les moyens de levage 43 et par l'axe d'appui 27 est compris dans l'épaisseur des montants 32 et 33 qui sont réalisés en fer à U. Il est à remarquer que des moyens de levage 43 autres que ceux constitués par un dispositif à bras croisés pourraient être utilisés. On pourrait très bien imaginer de remplacer le dispositif à bras croisés par un vérin mécanique, hydraulique ou pneumatique.

Ainsi que cela a déjà été mentionné plus haut dans le texte, il est nécessaire de procéder à l'échange des outils de découpage 12 et 13 lorsque l'on désire effectuer un travail différent avec la presse à platines 1 ou alors lorsqu'il faut remplacer des outils 12 et 13 usés ou détériorés. Pour effectuer cette opération d'échange des outils de découpage 12 et 13, l'utilisateur dispose une partie d'un premier outil de découpage 13 de remplacement et un second outil de découpage 12 de remplacement sur la première face du cadre support 31 du chariot déplaçable 11, cela dans une position hors-servi ce de celui-ci, l'opérateur retire ensuite la partie du premier outil de découpage, que l'on désire remplacer, de la station de découpage 3 de la presse à platines 1 pour l'amener sur les bras 9 et 10 disposés à ladite station de découpage 3, le chariot 11 est alors amené, perpendiculairement, à proximité des bras 9 et 10 de la station de découpage 3, l'opérateur retire une partie de cet outil de son cadre de support et va la déposer sur le chariot 11, contre la seconde face du cadre support 31, il retire ensuite la partie du premier outil de découpage 13 de remplacement de la première face du cadre support 31 et va la déposer et la fixer sur le cadre de support puis la réintroduire et la verrouiller dans la station de découpage 3 de la presse à platines 1. Ensuite, pour échanger le second outil de découpage 12, que l'on désire remplacer, de la station de découpage 3 de la presse à platines 1, il conviendra de le retirer de la machine pour l'amener sur les bras 9 et 10, et de le faire pivoter d'un angle de quatre-vingt-dix degrés dans un plan horizontal. A cet instant, on amène la première face du cadre support 31 du chariot 11 en contact avec l'outil ayant été pivoté et on le soulève, au moyen du cadre support 31 et des moyens de levage 43, pour le libérer de ses pivots de façon à ce qu'il soit supporté par le cadre support 31 du chariot 11. On éloigne ensuite le chariot 11 des bras 9 et 10 de la station de découpage 3 et on fait pivoter le cadre support 31 dans un plan vertical d'un angle de cent quatre-vingts degrés de façon à ce que sa seconde face supportant le second outil de découpage 12 de remplacement soit en regard des bras 9 et 10 de la station de découpage 3. Cet outil 12 sera alors amené au voisinage des pivots des bras 9 et 10 puis abaissé dans ces pivots, pour le libérer du cadre support 31 du chariot 11 avant de replacer celui-ci dans sa position hors-service. L'outil 12 sera ensuite pivoté à nouveau de quatre-vingt-dix degrés dans un plan horizontal pour qu'il puisse être introduit dans la station de découpage 3 où il sera verrouillé.

## Revendications

1. Procédé pour échanger des outils de découpage (12, 13) dans une presse à platines (1) à l'aide d'un chariot (11) déplaçable, procédé consistant à disposer une partie d'un premier outil de découpage (13) de remplacement et un second outil de découpage (12) de remplacement sur une première face sensiblement verticale d'un cadre support (31) du chariot (11) déplaçable, cela dans une position hors-service de celui-ci, à retirer un premier outil de découpage, que l'on désire remplacer, d'une station de découpage (3) de la presse à platines (1) pour l'amener sur des bras (9, 10) disposés à ladite station de découpage (3), à amener le chariot (11) à proximité des bras (9, 10) de la station de découpage (3), à retirer une partie de cet outil de son cadre de support et à déposer cette partie d'outil sur le chariot (11) contre une seconde face sensiblement verticale du cadre support (31), à retirer la partie du premier outil de découpage (13) de remplacement de la première face du cadre support (31) et à déposer et fixer cette partie du premier outil de découpage (13) de remplacement sur son cadre de support et à réintroduire et verrouiller ledit outil (13) dans la station de découpage (3) de la presse à platines (1), à retirer le second outil de découpage, que l'on désire remplacer, de la station de découpage (3) de la presse à platines (1) pour l'amener sur les bras (9, 10) disposés à ladite station de découpage (3), à faire pivoter ledit outil de découpage d'un angle de quatre-vingt-dix degrés dans un plan horizontal, à amener la première face du cadre support (31) du chariot (11) en contact avec l'outil ayant été pivoté, à soulever cet outil pour le libérer de ses pivots de façon à ce qu'il soit supporté par le cadre support (31) du chariot (11), à éloigner le chariot (11) des bras (9, 10) de la station de découpage (3), à faire pivoter le cadre support (31) du chariot (11) dans un plan vertical d'un angle de cent quatre-vingts degrés de façon à ce que sa seconde face supportant le second outil de découpage (12) de remplacement soit en regard des bras de la station de découpage (3), à amener cet outil (12) au voisinage de ses pivots, à abaisser l'outil (12) dans ses pivots, pour le libérer du cadre support (31) du chariot (11) avant de replacer celui-ci dans sa position hors-service, et à faire pivoter l'outil (12) de quatre-vingt-dix degrés dans un plan horizontal sur les pivots des bras (9, 10) pour ensuite l'introduire dans la station de découpage (3) dans laquelle il sera verrouillé.

2. Dispositif pour la mise en oeuvre du procédé selon la revendication 1, comprenant un chariot déplaçable (11) avec une embase (15) disposée au-dessous du plancher d'un podium (6), cette embase (15) étant équipée de moyens de roulement et de guidage (16 à 25) pour l'autoriser à se déplacer, sensiblement perpendiculairement à la face de la station de découpage (3), dans une rainure (29) aménagée dans le plancher du podium (6), caractérisé en ce que l'embase (15) est équipée, à sa partie supérieure d'un cadre support (31) constitué d'une plaque de base (30) munie d'un palier coulissant (34) traversé par un axe d'appui (27), fixé sur l'embase (15), et de deux montants (32, 33) sensiblement verticaux réunis à l'une de leurs extrémités et disposés sur la plaque de base (30) de façon à former un triangle isocèle, ledit cadre support (31) étant pourvu de moyens de levage (43) attachés au sommet du triangle isocèle formé par la plaque de base (30) et par les montants (32, 33) et prenant appui sur un pivot agencé à l'extrémité supérieure de l'axe d'appui (27) pour provoquer le déplacement vertical de bas en haut et de haut en bas du cadre support (31), le cadre support (31) pouvant pivoter autour de l'axe d'appui (27), en ce que la plaque de base (30) comporte des logements (35, 36) pour supporter des outils de découpage (12, 13) et en ce que des moyens de retenue des outils de découpage (12, 13) sont agencés au voisinage de la partie supérieure du triangle isocèle du cadre support (31).

3. Dispositif selon la revendication 2, caractérisé en ce que les moyens de roulement du chariot (11) déplaçable comprennent deux galets (16, 17), fixés sur l'embase (15) du chariot (11) et roulant sur un rail (18) disposé à même le sol sous le podium (6), et en ce que les moyens de guidage du chariot (11) sont constitués par des galets (20, 21) disposés de chaque côté de la partie supérieure de l'embase (15), ces galets roulant dans une coulisse composée de deux fers équerre (24, 25) fixés contre la face inférieure du podium (6).

4. Dispositif selon la revendication 2, caractérisé en ce que les moyens de levage (43) du cadre support (31) du chariot (11) sont constitués par un dispositif à bras croisés actionné par une vis de commande transversale (48).

5. Dispositif selon la revendication 4, caractérisé en ce que les moyens de levage (43) du cadre support (31) du chariot (11) sont constitués par un vérin dont le corps est fixé, de façon à pouvoir pivoter, à l'axe d'appui (27) de l'embase (15) du chariot (11) et dont la tige est fixée au sommet du triangle isocèle formé par les montants (32, 33) et la plaque de base (30) du cadre support (31) du chariot (11).

6. Dispositif selon la revendication 2, caractérisé en ce que le pivot agencé à l'extrémité de l'axe d'appui (27) de l'embase (15) du chariot (11) est constitué par une butée à billes (39) dont l'une des bagues (41) est fixée au point de pivot inférieur (42) des moyens de levage (43) et l'autre bague (40) est fixée à l'extrémité supérieure de l'axe d'appui (27).

7. Dispositif selon la revendication 2, caractérisé en ce que les moyens de retenue des outils de découpage (12, 13) sont constitués par des crochets pivotants (53, 54), fixés au sommet du triangle isocèle formé par les montants (32, 33) et la plaque de base (30) du cadre support (31) du chariot (11), les crochets pivotants (53, 54) possédant deux positions de verrouillage.

## Claims

1. Method for exchanging cutting tools (12, 13) in a platen press (1) by means of a movable carriage (11), method consisting in putting a part of a first replacement cutting tool (13) and a second replacement cutting tool (12) on the first almost vertical face of a supporting frame (31) of the movable carriage (11) when the latter is in its off-position, in extracting from the cutting section (3) of the platen press (1) a first cutting tool which has to be replaced in order to bring the tool on arms (9, 10) which are arranged at the level of the said cutting section (3), in bringing the carriage (11) close to the arms (9, 10) of the cutting section (3), in removing from the supporting frame a part of this tool and in laying it on the carriage (11), against a second almost vertical face of the supporting frame (31), in removing from the first face of the supporting frame (31) the part of the first replacement cutting tool (13) and in laying and fixing this part of the first replacement cutting tool (13) on its supporting frame and in inserting and locking the said tool (13) in the cutting section (3) of the platen press (1), in extracting from the cutting section (3) of the platen press (1) the second cutting tool (12) which has to be replaced, in order to bring it on the arms (9, 10) arranged at the level of the said cutting section (3), in having the said cutting tool pivot with an angle of 90° in a horizontal plane, in bringing the first face of the supporting frame (31) of the carriage (11) into contact with the tool which has been pivoted, in raising this tool in order to release it from its pivots so as to have it supported by the supporting frame (31) of the carriage (11), in taking away the carriage (11) from the arms (9, 10) of the cutting section (3), in having the supporting frame (31) of the carriage (11) pivot on a vertical plane with an angle of 180° so that its second face carrying the second replacement cutting tool (12) will face the arms of the cutting section (3), in bringing this tool (12) close to its pivots, in lowering the tool (12) on its pivots in order to release it from the supporting frame (31) of the carriage (11) before the latter is set back to its off-position and in having the tool (12) pivot of 90° in a horizontal plae on the pivots of the arms (9, 10) in order to insert it after in the cutting section (3) where it will be locked.

2. Device for setting into operation the method according to claim 1, including a movable carriage (11) with a base (15) arranged underneath the floor of the platform (6), this base (15) being provided with rolling and guiding means (16 to 25) so as to be able to move almost perpendicularly to the face of the cutting section (3) in a slot (29) arranged through the floor of the platform (6), characterized by the fact that the base (15) is equipped at its upper part with a supporting frame (31) made of a basic plate (30) provided with a sliding bearing (34) that is crossed by a supporting axle (27) which is fitted on the base (15) and with two almost vertical standards (32, 33) linked at one of their ends and arranged on the basic plate (30) in order to make up an isosceles triangle, the said supporting frame (31) being provided with hosting means (43) attached to the top of the isosceles triangle which is made up of the basic plate (30) and the standards (32, 33) and being supported by a pivot arranged at the upper end of the supporting axle (27) in order to cause the vertical ascent and descent of the supporting frame (31), the supporting frame (31) being able to pivot around the supporting axle (27), by the fact that the basic plate (30) comprises seats (35, 36) for supporting the cutting tools (12, 13) and by the fact that the means for retaining the cutting tools (12, 13) are arranged close to the upper part of the isosceles triangle of the supporting frame (31).

3. Device according to claim 2, characterized by the fact that the rolling means of the movable carriage (11) include rollers (16, 17) fitted on the base (15) of the carriage (11) and sliding on a rail (18) arranged on the ground underneath the platform (6), and by the fact that the guiding means of the carriage (11) consist of rollers (20, 21) arranged on either side of the upper part of the base (15), these rollers sliding in a groove which consists of two iron corner braces (24, 25) fitted against the lower face of the platform (6).

4. Device according to claim 2, characterized by the fact that the hosting means (43) of the supporting frame (31) of the carriage (11) consist of a device with folded arms actuated by a crosswise control screw (48).

5. Device according to claim 4, characterized by the fact that the hosting means (43) of the supporting frame (31) of the carriage (11) consist of a jack whose body is fitted, so as to be able to pivot, on the supporting axle (27) of the base (15) of the carriage (11) and whose rod is fitted on the top of the isosceles triangle made up of the standards (32, 33) and the basic plate (30) of the supporting frame (31) of the carriage (11).

6. Device according to claim 2, characterized by the fact that the pivot arranged at the end of the supporting axle (27) of the base (15) of the carriage (11) consist of a thrust ball bearing (39) of which one ring (41) is linked with the lower pivoting point (42) of the hosting means (43) and the other ring (40) is fitted on the upper end of the supporting axle (27).

7. Device according to claim 2, characterized by the fact that the means retaining the cutting tools (12, 13) consist of pivoting hooks (53, 54) fitted on the top of the isosceles triangle made up of the standards (32, 33) and the basic plate (30) of the supporting frame (31) of the carriage (11), the two pivoting hooks (53, 54) having two locking positions.

## Patentansprüche

1. Verfahren zum Austauschen von Stanzwerkzeugen (12, 13) in einer Tiegelstanze (1) mit Hilfe eines verschiebbaren Wagens (11), das darin besteht, einen Teil eines ersten Austauschstanzwerkzeuges (13) und ein zweites Austauschstanzwerkzeug (12) auf einer ersten sozusagen senkrechten Seite eines Tragrahmens (31) des verschiebbaren Wagens (11) anzuordnen, wenn sich letzterer in Ausserbetriebstellung befindet, ein erstes auszutauschendes Stanzwerkzeug aus einer Stanzstation (3) der Tiegelstanze (1) herauszunehmen, um es auf in der besagten Stanzstation (3) befindlichen Tragarme (9, 10) zu bringen, den Wagen (11) in die Nähe der Tragarme (9, 10) der Stanzstation (3) zu bringen, einen Teil dieses Werkzeuges aus seinem Tragrahmen herauszuziehen und diesen Werkzeugteil auf den Wagen (11) gegen eine zweite sozusagen senkrechte Seite des Tragrahmens (31) zu legen, den Teil des ersten Austauschstanzwerkzeuges (13) von der ersten Seite des Tragrahmens (31) zu entfernen und diesen Teil des ersten Austauschstanzwerkzeuges (13) auf seinen Tragrahmen zu legen und zu fixieren und das besagte Werkzeug (13) in die Stanzstation (3) der Tiegelstanze (1) einzuführen und dort zu verriegeln, das zweite auszutauschende Stanzwerkzeug (12) aus der Stanzstation (3) der Tiegelstanze (1) zur Beförderung auf die Tragarme herauszunehmen, welche in der besagten Stanzstation (3) angeordnet sind, das besagte Stanzwerkzeug um einen Winkel von neunzig Grad auf einer horizontalen Ebene zu drehen, die erste Seite des Tragrahmens (31) des Wagens (11) in Kontakt mit dem gedrehten Werkzeug zu bringen, dieses Werkzeug anzuheben, um es aus seinen Drehzapfen zu lösen, in der Weise, dass es vom Tragrahmen (31) des Wagens (11) getragen wird, den Wagen (11) von den Tragarmen (9, 10) der Stanzstation (3) abzurücken, den Tragrahmen (31) des Wagens (11) um einem Winkel von hundertachtzig Grad auf einer vertikalen Ebene zu drehen, damit sich seine zweite, das zweite Austauschstanzwerkzeug (12) tragende Seite gegenüber den Tragarmen der Stanzstation (3) befindet, dieses Werkzeug (12) in die Nähe seiner Drehzapfen zu bringen, dieses Werkzeug (12) in seine Drehzapfen abzusenken, um es aus dem Tragrahmen (31) des Wagens (11) zu lösen, bevor letzterer in seine Ausserbetriebstellung zurückgebracht wird, und das Werkzeug (12) um neunzig Grad auf einer horizontalen Ebene auf den Drehzapfen der Tragarme (9, 10) zu drehen, um es anschliessend in die Stanzstation (3) einzuführen, in welcher es verriegelt wird.

2. Vorrichtung zur Durchführung des Verfahrens gemäss Patentanspruch 1, einen verschiebbaren Wagen (11) mit einer unterhalb des Bodens eines Podiums (6) angeordneten Fussplatte (15) umfassend, welche mit Roll- und Führungsmitteln (16 bis 25) ausgerüstet ist, um die sozusagen senkrechte Verschiebung in bezug auf die Seite der Stanzstation (3) in einer im Boden des Podiums (6) angeordneten Rille (29) zu ermöglichen, dadurch gekennzeichnet, dass die Fussplatte (15) in ihrem oberen Teil mit einem Tragrahmen (31) ausgerüstet ist, der aus einer Grundplatte (30) mit einem Gleitlager (34), das seinerseits von einer an der Fussplatte (15) befestigten Stützachse (27) durchquert ist, sowie zwei sozusagen senkrechte Pfosten (32, 33) gebildet wird, die an einem ihrer Enden miteinander verbunden und auf der Grundplatte (30) angeordnet sind, in einer Weise, dass sie ein gleichschenkliges Dreieck bilden, wobei der besagte Tragrahmen (31) mit Hebemitteln (43) versehen ist, die an der Spitze des aus der Grundplatte (30) und den Pfosten (32, 33) gebildeten gleichschenkligen Dreiecks befestigt sind, und sich auf einem Drehzapfen abstützen, der am oberen Ende der Stützachse (27) angebracht ist, um die senkrechte Auf- und Abwärtsbewegung des Tragrahmens (31) herbeizuführen, wobei der Tragrahmen (31) um die Stützachse (27) drehen kann, dass die Grundplatte (30) Vertiefungen (35, 36) zum Stützen der Stanzwerkzeuge (12, 13) enthält, und dass die Haltevorrichtungen der Stanzwerkzeuge (12, 13) in der Nähe des oberen Teils des gleichschenkligen Dreiecks des Tragrahmens (31) angeordnet sind.

3. Vorrichtung gemäss Patentanspruch 2, dadurch gekennzeichnet, dass die Rollmittel des verschiebbaren Wagens (11) zwei Rollen (16, 17) umfassen, die auf der Fussplatte (15) des Wagens (11) befestigt sind und auf einer unmittelbar auf dem Boden unter dem Podium (6) angeordneten Schiene (18) laufen, und dass die Führungsmittel des Wagens (11) aus Rollen (20, 21) bestehen, die auf beiden Seiten des oberen Teils der Fussplatte (15) angeordnet sind, wobei diese Rollen in einer Gleitschiene aus zwei an der Unterseite des Podiums (6) befestigten Winkeleisen (24, 25) laufen.

4. Vorrichtung gemäss Patentanspruch 2, dadurch gekennzeichnet, dass die Hebemittel (43) des Tragrahmens (31) des Wagens (11) aus einer Vorrichtung mit gekreuzten Tragarmen bestehen, die von einer querliegenden Spindel angetrieben werden.

5. Vorrichtung gemäss Patentanspruch 4, dadurch gekennzeichnet, dass die Hebemittel (43) des Tragrahmens (31) des Wagens (11) aus einem Druckzylinder bestehen, dessen Körper so an der Stützachse (27) der Fussplatte (15) des Wagens (11) befestigt ist, dass er sich drehen kann und dessen Kolbenstange an der Spitze des aus den Pfosten (32, 33) und der Grundplatte (30) des Tragrahmens (31) des Wagens (11) gebildeten gleichschenkligen Dreiecks befestigt ist.

6. Vorrichtung gemäss Patentanspruch 2, dadurch gekennzeichnet, dass der am Ende der Stützachse (27) der Fussplatte (15) des Wagens (11) angebrachte Drehzapfen aus einem Druckkugellager (39) besteht, wobei einer seiner Ringe (41) am unteren Drehpunkt (42) der Hebemittel (43) und der andere Ring (40) am oberen Ende der Stützachse (27) befestigt ist.

7. Vorrichtung gemäss Patentanspruch 2, dadurch gekennzeichnet, dass die Haltemittel der Stanzwerkzeuge (12, 13) aus Drehhaken (53, 54) bestehen, die an der Spitze des aus den Pfosten (32, 33) und der Grundplatte (30) des Tragrahmens (31) des Wagens (11) gebildeten gleichschenkligen Dreiecks befestigt sind, wobei die Drehhaken (53, 54) zwei Verriegelungsstellungen besitzen.
